# EUROPEAN PATENT SPECIFICATION

(11) **EP 1 898 568 B1**
(45) Date of publication and mention of the grant of the patent: **17.10.2012**
(21) Application number: 06291417.1
(22) Date of filing: 05.09.2006
(51) Int. Cl.: H04L 12/56

(54) **Method for statistical multiplexing utilising a stochastic usage parameter control (UPC)**
Verfahren zum statistischen Multiplexen unter Benutzung eines stochastischen Benutzungsparameters (UPC)
Procédé de multiplexage, statistique utilisant un contrôle du paramètre d'utilisation (UPC) stochastique

(43) Date of publication of application: 12.03.2008
(73) Proprietor: Alcatel Lucent, 75007 Paris (FR)
(72) Inventor: Lautenschlaeger, Wolfram. Dr., 74343 Sachsenheim (DE)
(74) Representative: Wetzel, Emmanuelle

(56) References cited:
- EP-A1- 0 767 595
- EP-A1- 0 873 037
- JP-A- 9 312 667
- US-B1- 6 430 156

## Description

### Background of the invention

The invention relates to a method for statistically multiplexing of at least two data streams, wherein
- each data stream undergoes a usage parameter control (UPC),
   wherein the UPC limits a data stream to a passing remainder in case of a data stream overload,
- and subsequently, a statistical multiplexing of non-overloaded data streams and/or the passing remainders of overloaded data streams is done.

Such a method is known from ATM networks as described in ITU-T recommendation 1.371 or from EP 0 767 595 A1. It is also well known in residential Internet access networks over TV cable where the cable modem is able to serve e.g. data rates up to 20Mbit/s whereas end user contracts are available ranging from 128kbit/s, 512kbit/s etc. up to the full 20Mbit/s. Obviously, the network operator is utilizing here a UPC at the contracted data rates.

In modern data networks, equally as in telephone networks, a multitude of data streams is sent concurrently over one data transfer line.

In deterministic multiplexing systems, each data stream is allocated to a fixed part of the data transfer line, such as a fixed time frame, or a fixed wavelength interval. This guarantees a save data transfer for each data stream, but much of the data transfer capacity of the data transfer line may remain unused, since most users do not need their reserved part of a data transfer line all the time.

In statistically multiplexing systems, such as packet based networks, no reservations are made for users. A single user may not fully load a data transfer line, but each user may try to send data onto the data transfer line at any time. The dimensioning of a data transfer line is based on assumptions on the user behaviour. These assumptions include an average usage of the data transfer line by the users, and an independent acting of the users. As long as the assumptions are correct, the statistically multiplexing system works properly, in particular keeping the probability of a packet loss small, e.g. less than 10⁻⁴ for any packet of any user.

Most commercial data networks using statistical multiplexing apply a usage parameter control (UPC) that enforces adherence of customer traffic to contracted parameters, in particular a maximum data transfer rate. In case of an overload at an UPC, i.e. if a user wants to transfer a data stream with more data per time than allowed, the UPC drops the overshooting parts of the data traffic. As a result, the passing remainder of the data stream suddenly gets a deterministic shape. For example, a variable bit rate during normal operation turns into a constant bit rate during overload, with periodic arrivals of data packets at a multiplexing device.

In particular when two or even more data streams of such deterministic shape collide at a multiplexing device, this induced degeneration of traffic statistics violates the basic assumptions of statistical multiplexing. This increases the risk of an unpredictable loss of data, up to a total network crash.

EP 0 767 595 A1 describes a method and an apparatus for multiplexing a plurality of incoming data streams in burst mode. By means of an intermediate buffer for every incoming data stream, the data input into the outgoing data stream is limited.

JP 09 312 667 describes a method and device for data traffic control in statistical multiplexing. A buffer device stores data traffic from a data source. The time interval until a data packet is outputted from the buffer device again is at random.

### Object of the invention

It is the object of the invention to provide a method for statistical multiplexing of data streams which undergo a usage parameter control, which has an increased reliability, i.e. a reduced risk of data losses.

### Short description of the invention

This object is achieved, in accordance with the invention, by a method as introduced in the beginning, characterized in that the UPCs of the data streams are randomised such that the passing remainders of different data streams are stochastically and statistically independent signals, that the UPCs enforce adherence to contracted data flow parameters by means of a leaky bucket shaper, wherein an output data rate of the leaky bucket shaper is determined by adding a committed rate and a random rate extension.

With the inventive method, the deterministic shape of a passing remainder of a data stream is disposed of. The resulting inventive non-deterministic remainder fulfils the basic assumptions of statistical multiplexing, in particular the independence of different signals to be multiplexed, and the data network based on statistical multiplexing works properly. In case of a data stream overload, i.e. if a limit of data traffic per time is exceeded, the passing remainder is, to some degree, randomly shaped. This randomisation typically reduces the immediate data transfer rate for the user at overload, but guarantees the overall proper working of the data network.

The invention preserves a statistic multiplexing between saturated data paths in packet based networks. Long term dependence in traffic statistics that are induced by UPC are avoided.

With the invention, the number of data streams multiplexed is typically 10 or more, preferably 30 or more, and even maybe 100 or more. The invention can be used with line based data networks, in particular optical data networks, as well as with radio based data networks.

The UPCs typically limit the data transfer rate. This improves the access to the data network for users in general. The leaky bucket shaper can easily be extended to a randomiser function with an additional random pulse generator. This is a simple implementation for randomising the passing remainders.

### Preferred variants of the invention

In a preferred variant of the inventive method, the randomising at any one UPC of a data stream is independent of any processing at another UPC of another data stream. The passing remainders are asynchronous then. At each data stream the randomisation is done locally. This is highly reliably and facilitates an upgrading of a data network with further data streams.

In a highly preferred variant, a passing remainder of any one UPC is stochastically variable over time. This is the most important way to generate independent signals.

In a preferred further development of this variant, a variation occurs on the timescale in order of tens of milliseconds up to several minutes. This is usually sufficient to avoid any significant data losses.

Particularly preferred is another further development of the mentioned variant, wherein the UPCs apply data transfer rates that are variable over time. This is the most simple way to randomise a passing remainder. It can be realized, as a first option, by altering the channel data rate. This is particularly useful in radio based data networks. As a second option, the packet rate can be altered. This is particularly useful in line based networks.

Also within the scope of the invention is a data network, comprising at least two data transfer lines connected to a multiplexer device, wherein each data transfer line comprises a UPC device for limiting a data stream on the data transfer line to a passing remainder in case of a data stream overload, and wherein the multiplexer device is suitable for statistically multiplexing the data streams resp. the passing remainders of the data transfer lines, characterized in that the UPC devices each comprise a randomiser for determining the passing remainder such that the passing remainder is stochastically variable over time, and that the UPC device comprises a leaky bucket shaper with a first pulse generator, and the randomiser comprises a random pulse generator, wherein the random pulse generator is connected to the first pulse generator such that their outputs are added. The inventive data network has an increased reliability.

Note that according to the invention, it is possible to give a data stream a random shape also when the data stream is not overloaded. This may simplify the processing and/or the network construction.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic block diagram of a network ingress with UPC during normal operation, according to the state of the art;
- Fig. 2: shows a schematic block diagram of the network ingress of Fig. 1 during permanent overload, according to the state of the art;
- Fig.3: shows a schematic block diagram of a network ingress during permanent overload with randomized UPC according to the invention;
- Fig. 4: shows a schematic block diagram of an extended leaky bucket shaper for randomizing a passing remainder in accordance with the invention.

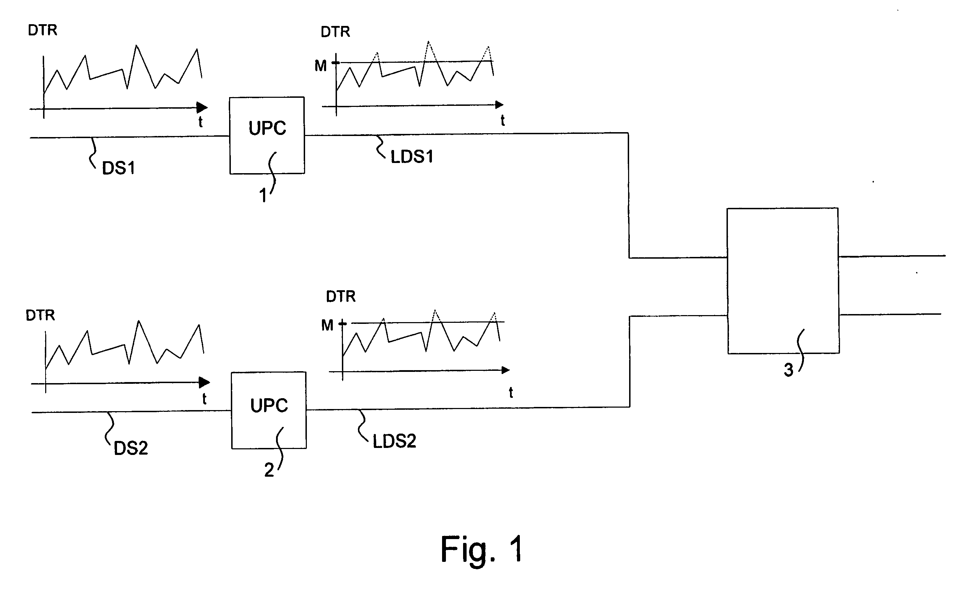

**Figure 1** shows a network ingress of a data network based on statistical multiplexing with usage parameter control (UPC) during normal operation.

There are two data streams DS1, DS2, each with a data transfer rate DTR variable over time t, see inset diagrams above the input data streams DS1, DS2. The data streams DS1, DS2 are fed into UPC devices 1, 2 which limit the data transfer rate to a maximum value M. Most of the time, the data streams DS1, DS2 are below the limit value M, and only the peaks of the input data streams are dropped. The dropped parts of the data streams are marked with dashed lines.

The limited data streams LDS1, LDS2 after the UPC devices 1, 2 are still stochastic processes. At the input of the multiplexing device 3 there are two variable data streams from UPC device 1 and UPC device 2 available, which are statistically independent. The basic assumptions for statistical multiplexing in multiplexing device 3 are fulfilled.

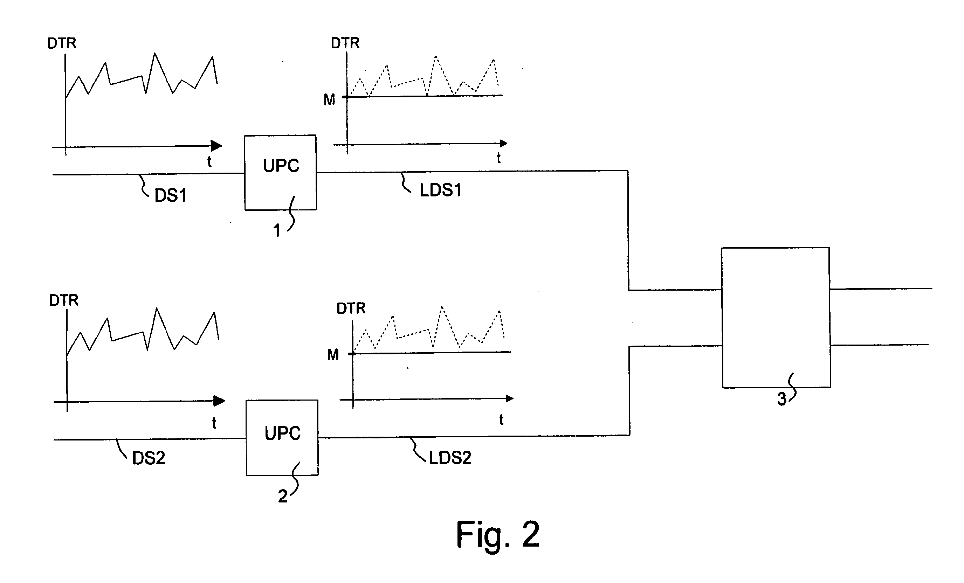

**Figure 2** shows the network ingress of Fig. 1 during permanent overload.

The input data streams DS1, DS2 now have much higher average data transfer rates DTR. In the UPC devices 1, 2, the limitation of the data transfer rate to the maximum value M results in a constant data transfer rate of the limited data streams LDS 1, LDS 2 of exactly the value M, see the inset diagrams above the limited data streams LDS1, LDS2. All peaks, which constitute the only variable parts of the input data signals DS1, DS2, are lost due to the limitation in the UPC devices 1, 2.

As a result, the input signals at the multiplexing device 3 are not statistically independent any more, but they are deterministic, e.g. with a constant packet rate. Assumptions on statistical multiplexing are not valid any more. This effect can poison the whole network, not only those data paths that are in overload.

An example of such a degenerated statistical multiplexing case is the multiplexing of several input signals with constant (i.e. periodic) packet rate which are, by accident, all in phase. The multiplexer device will face a periodic overload with idle periods in between. This situation will never resolve as long as the signals remain deterministic.

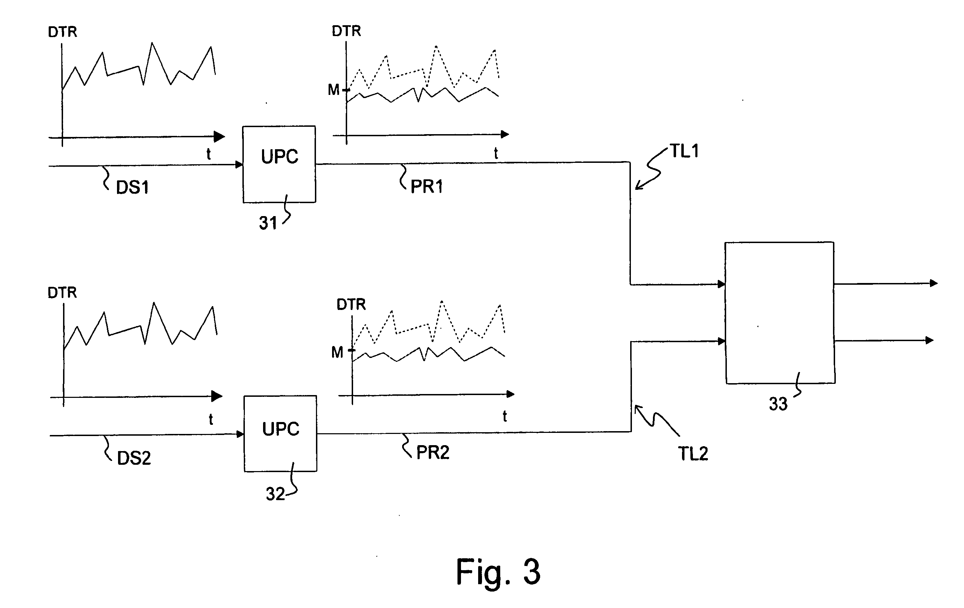

**Figure 3** illustrates the inventive solution for the network ingress shown in Fig. 2.

Again, the input data streams DS1, DS2 have high data transfer rates, exceeding a maximum value M that is scheduled to be respected by the UPC devices 31, 32. According to the invention, the data streams DS1, DS2 are limited by the UPC devices 31, 32 in a way such that randomized data signals remain; the limited signals are called passing remainders PR1, PR2. In the example given, the allowed data transfer rate of the passing remainders PR1, PR2 has been varied over time, respecting the maximum value M of a data transfer rate for the passing remainder PR1, PR2. In other words, the data transfer rate of the passing remainders PR1, PR2 varies randomly between e.g. 0.8*M and M over time. Note that this results in an average data transfer rate of the passing remainders PR1, PR2 of less than the value M. Further note that preferably, each UPC unit 31, 32 has a separate randomizer (for determining the shape of its passing remainder PR1, PR2) each.

As a result, even in case of permanent overload the data streams DS1, DS2, at the input of the multiplexer device 33, there are stochastically and statistically independent signals supplied via the data transfer lines TL1, TL2. Note that in practice, there may be a cascade of multiplexer devices. Further note that the data transfer lines TL1, TL2 may be realized as, in particular, optical fibers or electrical lines or radio channels.

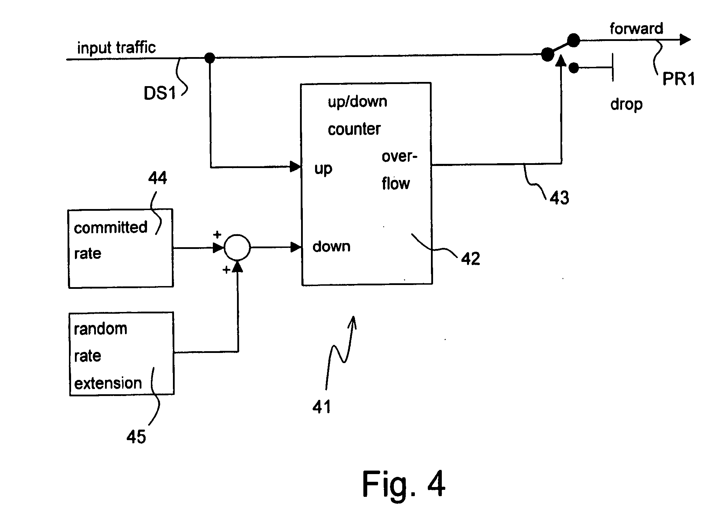

In the following, an implementation of a stochastic UPC, i.e. a UPC device with a randomizer in accordance with the invention, is described with respect to **Figure 4****.**

The implementation of a stochastic UPC is done by an extended leaky bucket shaper 41. The extended leaky bucket shaper 41 generates a passing remainder PR1 out of an input data stream DS1.

The extended leaky bucket shaper 41 comprises, in its heart, an up/down counter 42 with limitation downwards at zero and upwards at a fixed value, called the bucket size. Whenever the counter 42 hits the lower limit, it remains at zero. On the other side, if it hits the upper limit, it remains at that limit and generates an overflow signal 43.

Each incoming data packet increments the counter value by the packet size, or, in case of fixed packet size, simply by one. If an overflow occurs, the packet is being dropped, otherwise it is forwarded to the output of the device. On the other hand a pulse generator 44 decrements the counter value at a committed rate, the leakage, or as fixed in a service level agreement. Up to this point this corresponds to a normal leaky bucket shaper.

The proposed extension is an additional random pulse generator 45 whose output is added to the regular pulses of the first pulse generator 44, which creates virtually a random rate extension in excess to what is set by the committed rate.

If the committed rate is *C,* and the random rate extension is spread between zero and *B* with an average rate *m,* than the resulting output data rate *R* is limited
1. at minimum at *R*ₘᵢₙ ≤ *C*
2. at maximum at *R*ₘₐₓ ≤ *C* + *B*
3. in average at *R* ≤ *C* + *m*

It depends on the intention of the UPC, which value of the above three is communicated either to customers as well as to other network elements.

## Claims

1. Method for statistically multiplexing of at least two data streams (DS1, DS2), wherein
- each data stream (DS1, DS2) undergoes a usage parameter control UPC,
wherein the UPC limits a data stream (DS1, DS2) to a passing remainder (PR1, PR2) in case of a data stream overload,
- and subsequently, a statistical multiplexing of non-overloaded data streams and/or the passing remainders (PR1, PR2) of overloaded data streams (DS1, DS2) is done,
**characterized in that**
the UPCs of the data streams (DS1, DS2) are randomised such that the passing remainders (PR1, PR2) of different data streams (DS1, DS2) are stochastically and statistically independent signals,
that the UPCs enforce adherence to contracted data flow parameters by means of a leaky bucket shaper (41), wherein an output data rate (R) of the leaky bucket shaper (41) is determined by adding a committed rate (C) and a random rate extension.

2. Method according to claim 1, **characterized in that** the randomising at any one UPC of a data stream (DS1, DS2) is independent of any processing at another UPC of another data stream (DS1, DS2).

3. Method according to claim 1, **characterized in that** a passing remainder (PR1, PR2) of any one UPC is stochastically variable over time.

4. Method according to claim 3, **characterized in that** a variation occurs on the timescale in order of tens of milliseconds up to several minutes.

5. Method according to claim 3, **characterized in that** the UPCs apply data transfer rates (DTR) that are variable over time.

6. Data network,
comprising at least two data transfer lines (TL1, TL2) connected to a multiplexer device (33),
wherein each data transfer line (TL1, TL2) comprises a usage parameter control UPC device (31, 32) for limiting a data stream (DS1, DS2) on the data transfer line (TL1, TL2) to a passing remainder (PR1, PR2) in case of a data stream overload,
and wherein the multiplexer device (33) is suitable for statistically multiplexing the data streams (DS1, DS2) resp. the passing remainders (PR1, PR2) of the data transfer lines (TL1, TL2),
**characterized in that**
the UPC devices (31, 32) each comprise a randomiser for determining the passing remainder (PR1, PR2) such that the passing remainder (PR1, PR2) is stochastically variable over time, and that the UPC device (31, 32) comprises a leaky bucket shaper (41) with a first pulse generator (44), which provides a committed rate, and the randomiser comprises a random pulse generator (45), which provides a random rate extension, wherein the random pulse generator (45) is connected to the first pulse generator (44) such that their outputs are added.

## Patentansprüche

1. Verfahren zum statistischen Multiplexen mindestens zweier Datenströme (DS1, DS2), wobei
- jeder Datenstrom (DS1, DS2) einer Benutzerparameterregelung UPC, unterworfen wird, wobei die UPC im Fall einer Datenstromüberlastung einen Datenstrom (DS1, DS2) auf einen durchgelassenen Rest (PR1, PR2) begrenzt,
- und anschließend ein statistisches Multiplexen von Datenströmen, die keine Überlast-Datenströme sind, und/oder der durchgelassenen Reste (PRA, PR2) überlasteter Datenströme (DS1, DS2) durchgeführt wird,
**dadurch gekennzeichnet, dass**
die UPCs der Datenströme (DS1, DS2) derart randomisiert werden, dass die durchgelassenen Reste (PR1, PR2) verschiedener Datenströme (DS1, DS2) stochastisch und statistisch unabhängige Signale sind,
dass die UPCs mittels eines Leaky-Bucket-Formers (41) die Einhaltung der festgelegten Datenflussparameter durchsetzen, wobei eine Ausgangsdatenrate (R) des Leaky-Bucket-Formers (41) durch Addierern einer garantierten Rate (C) und einer Zufallsratenenveiterung bestimmt wind.

2. Verfahren nach Anspruch 1, **dadurch gekennzeichnet, dass** die Randomisierung an einer beliebigen UPC eines Datenstroms (DS1, DS2) unabhängig von jeglicher Verarbeitung an einer anderen UPC eines anderen Datenstroms (DS1, DS2) erfolgt.

3. Verfahren nach Anspruch 1, **dadurch gekennzeichnet, dass** ein durchgelassener Rest (PR1, PR2) einer beliebigen UPC stochastisch zeitvariant ist.

4. Verfahren nach Anspruch 3, **dadurch gekennzeichnet, dass** eine Variation auf der Zeitskala in einer Größenordnung von einigen zehn Millisekunden bis zu mehreren Minuten erfolgt.

5. Verfähren nach Anspruch 3, **dadurch gekennzeichnet, dass** die UPCs Datenübertragungsraten (DTR) anwenden, die zeitvariant sind.

6. Datennetzwerk,
umfassend mindestens zwei Datenübertragungsleitungen (TL1, TL2) die an eine Multiplexervorrichtung (33) angeschlossen sind,
wobei jede Datenübertragungsleitung (TL1, TL2) eine Benutzerparameterregelungs- bzw. UPC-Vorrichtung (31, 32) umfasst, um einen Datenstrom (DS1, DS2) auf der Datenübertragungsleitung (TL1, TL2) im Fall einer Datenstromüberlastung auf einen durchgelassenen Rest (PR1, PR2) zu begrenzen,
und wobei die Multiplexervorrichtung (33) für das statistische Multiplexen der Datenströme (DS1, DS2) bzw. der durchgelassene Rest (PR1, PR2) der Datenübertragungsleitungen (TL1, TL2) ausgelegt ist,
**dadurch gekennzeichnet, dass**
die UPC-Vorrichtungen (31, 32) jeweils einen Zufallsgenerator umfassen, um den durchgelassenen Rest (PR1, PR2) derart zu bestimmten, dass der durchgelassene Rest (PR1, PR2) stochastisch zeitvariant ist, und dass die UPC-Vorrichtung (31, 32) einen Leaky-Bucket-Former (41) mit einem ersten Pulsgenerator (44) umfasst, welcher eine garantierte Rate bereitstellt, und dass der Zufallsgenerator einen Zufalls-Pulsgenerator (45) umfasst, welcher eine Zufallsratenerweiterung bereitstellt, wobei der Zufalls-Pulsgenerator (45) an den ersten Pulsgenerator (44) angeschlossen ist, so dass deren Ausgänge addiert werden.

## Revendications

1. Procédé de multiplexage statistique d'au moins deux flux de données (DS1, DS2), dans lequel
- chaque flux de données (DS1, DS2) subit un contrôle des paramètres d'utilisation UPC, dans lequel l'UPC limite un flux de données (DS1, DS2) à un reste de passage (PR1, PR2) en cas de surcharge de flux de données,
- et par la suite, un multiplexage statistique de flux de données non surchargés et/ou des restes de passage (PR1, PR2) de flux de données (DS1, DS2) surchargés est réalisé,
**caractérisé en ce que**
les UPC, des flux de données (DS1, DS2) sont randomisés de sorte que les restes de passage (PR1, PR2) de flux de données (DS1, DS2) différents soient des signaux indépendants d'un point de vue stochastique et d'un point de vue statistique,
**en ce que** les UPC appliquent une adhésion à des paramètres de flux de données souscrits au moyen d'un dispositif à fuite (41), dans lequel un débit de données de sortie (R) du dispositif à fuite (41) est déterminé en ajoutant un débit garanti (C) et une extension de débit aléatoire.

2. Procédé selon la revendication 1, **caractérisé en ce que** la randomisation à tout UPC, d'un flux de données (DS1, DS2) est indépendante de tout traitement à un autre UPC, d'un autre flux de données (DS1, DS2).

3. Procédé selon la revendication 1, **caractérisé en ce qu'**un reste de passage (PR1, PR2) de tout UPC est variable dans le temps d'un point de vue stochastique.

4. Procédé selon la revendication 3, **caractérisé en ce qu'**une variation se produit sur l'échelle de temps de l'ordre de dizaines de millisecondes jusqu'à plusieurs minutes.

5. Procédé selon la revendication 3, **caractérisé en ce que** les UPC appliquent des débits de transfert de données (DTR) qui sont variables dans le temps.

6. Réseau de données,
comprenant au moins deux lignes de transfert de données (TL1, TL2) connectées à un dispositif multiplexeur (33),
dans lequel chaque ligne de transfert de données (TL1, TL2) comprend un dispositif de contrôle des paramètres d'utilisation UPC, (31, 32) pour limiter un flux de données (DS1, DS2) sur la ligne de transfert de données (TL1, TL2) à un reste de passage (PR1, PR2) en cas de surcharge de flux de données,
et dans lequel le dispositif multiplexeur (33) est adapté au multiplexage statistique des flux de données (DS1, DS2) respectivement les restes de passage (PR1, PR2) des lignes de transfert de données (TL1, TL2),
**caractérisé en ce que**
les dispositifs UPC (31, 32) comprennent chacun un dispositif de randomisation pour déterminer le reste de passage (PR1, PR2) de sorte que le reste de passage (PR1, PR2) soit variable dans le temps d'un point de vue stochastique, et de sorte que le dispositif UPC (31, 32) comprenne un dispositif à fuite (41) avec un premier générateur d'impulsions (44), qui fournit un débit garanti, et le dispositif de randomisation comprend un générateur d'impulsions aléatoires (45), qui fournit une extension de débit aléatoire, dans lequel le générateur d'impulsions aléatoires (45) est connecté au premier générateur d'impulsions (44) de sorte que leurs sorties soient ajoutées.
